# FASCICULE DE BREVET EUROPEEN

(11) **EP 1 048 839 B1**
(45) Date de publication et mention de la délivrance du brevet: **03.09.2003**
(21) Numéro de dépôt: 00401061.7
(22) Date de dépôt: 17.04.2000
(51) Int. Cl.: F02M 25/07

(54) **Echangeur thermique en plastique et acier destiné à être disposé dans un circuit d'admission d'air d'un moteur**
Wärme tauscher aus Plastik und Stahl zum Einbau in einem Stromkreis des Lufteinlasses einer Brennkraftmaschine
Thermal exchanger out of plastic and steel to be laid out in a circuit of air inlet of an engine

(30) Priorité: 29.04.1999 FR 9905453
(43) Date de publication de la demande: 02.11.2000
(73) Titulaire: WEVISTA, 59058 Roubaix Cedex 1 (FR)
(72) Inventeur: Lepoutre, Henri, 59058 Roubaix Cedex 1 (FR)
(74) Mandataire: Eidelsberg, Victor Albert

(56) Documents cités:
- US-A- 3 937 196
- US-A- 4 258 687
- PATENT ABSTRACTS OF JAPAN vol. 1999, no. 03, 31 mars 1999 (1999-03-31) & JP 10 331724 A (CALSONIC CORP), 15 décembre 1998 (1998-12-15)
- PATENT ABSTRACTS OF JAPAN vol. 1999, no. 04, 30 avril 1999 (1999-04-30) & JP 11 013554 A (CALSONIC CORP), 19 janvier 1999 (1999-01-19)

## Description

La présente invention se rapporte à des éléments du circuit d'admission d'air pour un moteur à combustion interne disposés en communication avec la tête du moteur pour alimenter en air les différents cylindres du moteur, par exemple un répartiteur d'admission, un filtre ou un tube de liaison entre le filtre et le répartiteur. Ce genre de d'éléments du circuit d'admission, notamment un répartiteur, comporte de manière générale un corps, notamment en matériau plastique, définissant une chambre d'admission d'air, ayant une entrée pour l'air et une sortie de communication avec la tête du moteur.

La présente invention se rapporte également à des échangeurs de chaleur destinés à être disposés dans le circuit d'admission d'air d'un moteur à combustion.

De plus en plus, pour des raisons liées à la protection de l'environnement, on souhaite pouvoir recycler les gaz d'échappement pour les réintroduire dans le cycle d'admission d'air pour la combustion du moteur.

Pour pouvoir réintroduire dans le cycle d'admission les gaz d'échappement issus du moteur après combustion, il est nécessaire de les refroidir, d'une part pour une question de rendement, le rendement d'un moteur à combustion étant d'autant meilleur que l'air d'admission est de température faible, et d'autre part également parce qu'on ne peut pas laisser pénétrer des gaz d'échappement trop chauds dans les éléments du circuit d'admission, par exemple le répartiteur d'admission, ces éléments du circuit d'admission actuels étant en matériaux plastique, matériaux plastique qui seraient endommagés par les températures élevées des gaz d'échappement.

Pour refroidir ces gaz d'échappement, on prévoit donc actuellement, le long de la ligne de dérivation des gaz d'échappement en direction de l'entrée de l'élément du circuit d'admission, de disposer un échangeur de chaleur apte à refroidir les gaz d'échappement à une température acceptable pour l'entrée dans l'élément du circuit d'admission du moteur. Ces dispositifs actuels sont compliqués à installer, le tuyau d'admission des gaz d'échappement devant être relié de part et d'autre de l'échangeur de chaleur et ses liaisons sont tellement compliquées que d'une part il existe un taux élevé de rebuts à la fabrication (notamment dans le cas des soudures) et d'autre part les coûts de fabrication sont élevés, nécessitant une main d'oeuvre importante (pour fabriquer l'échangeur) et un temps de montage important (pour monter l'échangeur).

Suivant l'invention on vise à pallier ces inconvénients grâce à un élément du circuit d'admission pour un moteur à combustion interne, notamment un répartiteur d'admission, qui permet un recyclage des gaz d'échappement qui est néanmoins facile à fabriquer, tant en terme de coût que de main d'oeuvre, en diminuant le nombre de liaison par soudure à effectuer sur l'échangeur de chaleur, et qui permet d'obtenir un élément du circuit d'admission pour un moteur à combustion interne particulièrement efficace en ce qui concerne le recyclage des gaz d'échappement sans nuire pour autant à son intégrité, notamment dans le cas des répartiteurs d'admission en matériaux plastiques, qui ont tendance à se détériorer par fusion du plastique sous l'effet des températures élevées des gaz d'échappement.

Suivant l'invention, un élément du circuit d'admission, notamment un répartiteur d'admission, pour un moteur à combustion interne comportant un corps creux au moins en partie en matériaux plastique définissant une chambre d'admission d'air, ayant une entrée pour l'air et une ou des sortie(s) de communication avec la tête du moteur est caractérisé en ce que
- le corps au moins en partie en matériau plastique comporte une cloison au moins en partie en matériau plastique définissant une chambre auxiliaire ayant une première ouverture vers l'extérieur, une deuxième ouverture communiquant avec la chambre d'admission, une troisième ouverture communiquant avec un canal d'amenée de fluide de refroidissement et une quatrième ouverture communiquant avec un canal de sortie de fluide de refroidissement,
- un assemblage métallique formant la partie chaude d'un échangeur de chaleur pour refroidir les gaz d'échappement qui passent dans l'assemblage par le fluide de refroidissement, est logé dans la chambre auxiliaire, la sortie de l'assemblage communiquant avec la deuxième ouverture de la chambre auxiliaire, et la chambre auxiliaire constitue la calandre de l'échangeur de chaleur, et
- un premier élément métallique et un second élément métallique sont disposés de manière à diviser la chambre auxiliaire et donc la calandre en un premier compartiment d'extrémité communiquant avec l'extérieur, un compartiment central et un deuxième compartiment d'extrémité, le compartiment central communiquant avec les troisième et quatrième ouvertures de manière à permettre le passage du fluide de refroidissement de l'une à l'autre sans possibilité de passer dans l'un des deux compartiments d'extrémité, le premier élément métallique étant interposé entre la partie de l'assemblage se trouvant dans le premier compartiment d'extrémité et une partie au moins de la cloison de la chambre auxiliaire.

En prévoyant ainsi une deuxième chambre conformée à l'assemblage métallique formant la partie chaude d'un échangeur de chaleur de manière à former la calandre de l'échangeur de chaleur et en prévoyant des pièces métalliques pour protéger le matériau plastique de l'élément du circuit d'admission, notamment un répartiteur d'admission, à l'endroit où la température des gaz d'échappement dans l'échangeur est la plus élevée et donc la plus susceptible d'endommager le matériau plastique, on obtient un élément du circuit d'admission en matériau plastique dans lequel est intégré un échangeur de chaleur permettant un recyclage des gaz d'échappement, et on n'a donc plus besoin de moyens complexes d'assemblage des conduits de recyclage des gaz d'échappement de part et d'autre de l'échangeur de chaleur.

Suivant un perfectionnement de l'invention, il est prévu un dispositif de verrouillage, notamment par encliquetage, pour fixer l'assemblage à l'élément du circuit d'admission, dans sa position de fonctionnement dans la chambre auxiliaire.

On s'assure ainsi d'une bonne fixation, et donc d'une bonne intégration de l'échangeur de chaleur à l'élément du circuit d'admission.

Suivant un perfectionnement de l'invention, le second élément métallique est également interposé entre l'assemblage formant la partie chaude se trouvant dans le deuxième compartiment d'extrémité et la paroi de la chambre auxiliaire ou calandre.

On s'assure ainsi une séparation complète de la partie chaude et de la matière plastique, puisque dans les deux compartiments d'extrémité il y a une pièce métallique qui sépare le circuit chaud de la cloison, tandis que dans le compartiment central, c'est le fluide de refroidissement soi-même qui est disposé de manière intermédiaire entre l'assemblage chaud et la cloison formant la chambre auxiliaire.

Suivant un perfectionnement de l'invention, on prévoit qu'une partie au moins du premier élément métallique est à l'aplomb de la troisième ouverture de la chambre auxiliaire.

Ainsi, le premier élément métallique est directement en contact avec la partie la plus froide du fluide de refroidissement, ce qui permet de le maintenir à une température la plus faible possible par conduction sur toute sa partie, ce qui permet de séparer thermiquement de manière efficace la partie la plus chaude de l'assemblage de la cloison en matériau plastique.

Suivant un perfectionnement de l'invention on prévoit qu'une partie au moins du second élément métallique est à l'aplomb de la quatrième ouverture, ce qui permet également de refroidir de la même manière que le premier élément métallique par la troisième ouverture, le second élément métallique par conduction dans son ensemble, ce qui permet d'assurer une bonne séparation thermique entre la partie chaude de l'échangeur de chaleur du côté sortie et la cloison définissant la chambre auxiliaire.

Suivant un mode de réalisation de l'invention, la chambre auxiliaire est cylindrique, l'échangeur de chaleur est un échangeur de chaleur cylindrique constitué d'un premier entonnoir et d'un deuxième entonnoir entre lesquels s'étend un faisceau de tubes, et les deux éléments métalliques sont sous la forme d'une cloche cylindrique constituée de deux anneaux disposés côte à côte de rayons différents, et relié l'un à l'autre par un échelon ou rebord, l'anneau ayant le plus petit rayon se trouvant juste en dessous de la troisième ouverture, tandis que l'anneau de plus grand diamètre vient s'ajuster de manière serrée à la cloison cylindro-circulaire de la chambre auxiliaire.

Suivant un mode de réalisation préféré, il est disposé entre le premier élément métallique et la cloison, un joint d'étanchéité, notamment un joint annulaire dans le cas d'un échangeur de chaleur cylindrique.

De même, suivant un autre mode de réalisation préféré, il est prévu également un joint d'étanchéité entre le deuxième élément métallique et la cloison de la chambre auxiliaire.

Suivant un mode de réalisation préféré de l'invention, la sortie de la partie chaude de l'échangeur de chaleur est formée d'un tube coudé dont l'extrémité distale coïncide avec la deuxième ouverture de la chambre auxiliaire.

L'invention vise également un échangeur de chaleur destiné à être disposé dans le circuit d'admission d'un moteur à combustion interne, notamment dans un répartiteur d'admission comportant un corps creux en matériau plastique définissant une chambre d'admission d'air, une entrée pour l'air et une ou des sortie(s) de communication avec la tête du moteur, caractérisé en ce qu'il est constitué :
- d'une chambre au moins en partie en matériau plastique ayant une première ouverture vers l'extérieur, une deuxième ouverture communiquant avec la chambre d'admission, une troisième ouverture communiquant avec un canal d'amenée de fluide de refroidissement et une quatrième ouverture communiquant avec un canal de sortie de fluide de refroidissement,
- d'un assemblage métallique formant la partie chaude de l'échangeur de chaleur pour refroidir les gaz d'échappement par le fluide de refroidissement, logé dans la chambre, la sortie de l'assemblage communiquant avec la deuxième ouverture de la chambre, et la chambre constitue la calandre de l'échangeur de chaleur, et
- d'un premier élément métallique et d'un second élément métallique disposés de manière à diviser la chambre auxiliaire et donc la calandre en un premier compartiment d'extrémité communiquant avec l'extérieur, un compartiment central et un deuxième compartiment d'extrémité, le compartiment central communiquant avec les troisièe et quatrième ouvertures de manière à permettre le passage du fluide de refroidissement de l'une à l'autre sans possibilité de passer dans l'un des deux compartiments d'extrémité, le premier élément métallique étant interposé entre la partie de l'assemblage se trouvant dans le premier compartiment d'extrémité et une partie au moins de la cloison de la chambre auxiliaire.

On décrit maintenant uniquement à titre d'exemple, des modes de réalisation préférés de l'invention, en se référant au dessin annexé dans lequel :
la figure 1 est une vue en perspective d'un répartiteur d'admission suivant l'invention, dont une partie a été arrachée pour permettre de mieux voir l'échangeur de chaleur tel qu'il est disposé dans le répartiteur d'admission,
la figure 2 est une vue de côté d'une partie (premier compartiment d'extrémité et une partie du compartiment central) de la chambre auxiliaire et de l'échangeur de chaleur qui y est en position monté,
la figure 3 est une vue en perspective d'une partie chaude d'un échangeur de chaleur tel que celles incorporées dans les répartiteurs d'admission suivant l'invention,
la figure 4 est un autre mode de réalisation d'un autre échangeur de chaleur pouvant également être utilisé dans un répartiteur d'admission suivant l'invention, et
la figure 5 est une vue de côté d'un échangeur de chaleur suivant l'invention.

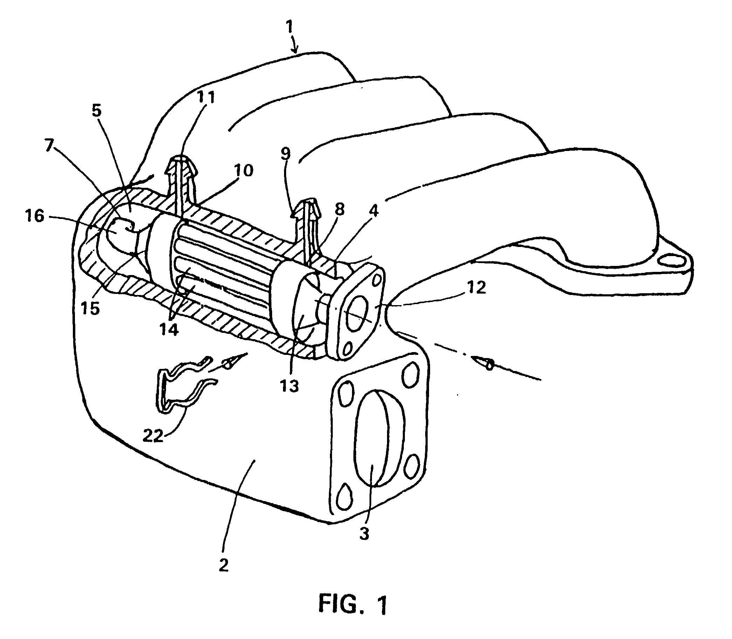

A la figure 1, il est représenté un répartiteur d'admission, qui est destiné à se trouver en communication avec la tête d'un moteur afin de transmettre de l'air d'admission pour le cycle de combustion du moteur. Ce répartiteur d'admission à la figure 1 est constitué d'un corps 1 creux définissant une chambre 2 d'admission. La chambre 2 formée dans le corps 1 comporte une ouverture 3 en communication avec le boîtier papillon, par laquelle pénètre l'air d'admission frais. La chambre 2 comporte également quatre ouvertures chacune en communication avec la tête du moteur et par lesquelles sort l'air d'admission après avoir été réparti dans le répartiteur d'admission. Le corps 1 creux présente au voisinage des quatre ouvertures (qui ne sont pas représentées à la figure car cachées par la perspective) la forme de quatre conduits disposés les uns à côté des autres qui permettent une répartition de l'air d'admission pénétrant par l'ouverture 3.

A l'intérieur du corps 1 creux, il est disposé une cloison 4, de manière à former une chambre 5 auxiliaire distincte de la chambre 2 d'admission, à l'intérieur du corps 1 creux. A la figure 1, une partie de la paroi 4 délimitant la chambre 5 auxiliaire a été arrachée pour aider à la compréhension de l'invention. La chambre 5 auxiliaire comprend une première ouverture 6 en communication avec l'extérieur, une deuxième ouverture 7 permettant de faire communiquer la chambre 5 auxiliaire avec la chambre 2 d'admission, une troisième ouverture 8 communiquant avec un canal 9 d'amenée de fluide de refroidissement, en liaison avec un système de refroidissement, par exemple du moteur. La chambre 5 comprend en outre une quatrième ouverture 10 en communication avec un canal 11 de sortie de fluide de refroidissement pour le renvoyer vers le système d'alimentation en fluide de refroidissement du moteur. La chambre 5 auxiliaire est de forme sensiblement cylindro-circulaire. Elle constitue la calandre (c'est-à-dire l'enveloppe extérieure) d'un échangeur de chaleur. Cet échangeur de chaleur est destiné à refroidir des gaz d'échappement pour pouvoir les recycler dans la chambre d'admission du répartiteur d'admission. Ces gaz d'échappement vont circuler dans ce que l'on appelle la partie chaude de l'échangeur de chaleur en étant refroidis par le fluide de refroidissement arrivant par le canal 9 d'amenée de fluide de refroidissement et ressortant par le canal 11 de sortie de fluide de refroidissement. C'est par l'ouverture 7 que les gaz d'échappement refroidis vont pouvoir pénétrer dans la chambre 1 d'admission en vue de retourner au moteur après avoir été répartis dans les différents conduits du répartiteur d'admission.

La partie chaude de l'échangeur de chaleur est constituée d'un ensemble de pièces en acier inoxydable, qui sont assemblées par brasure forte. Elles comportent une bride d'entrée (tout autre système de connexion pouvant également être envisagé) pour l'arrivée des gaz d'échappement, cette bride 12 étant reliée à un entonnoir 13 qui permet de répartir les gaz d'échappement sur l'ensemble des tubes 14 d'un faisceau de tubes. L'ensemble des tubes 14 est relié de l'autre côté à un autre entonnoir 15 qui est destiné à rassembler l'ensemble des gaz d'échappement issus des différents tubes 14 pour conduire ces gaz d'échappement par l'ouverture 7 par l'intermédiaire d'un conduit coudé 16. Le fluide de refroidissement, après avoir pénétré par l'ouverture 8 circule autour des tubes 14 pour refroidir le gaz d'échappement qui se trouve à l'intérieur de ces tubes 14 et qui y circule, puis le fluide de refroidissement un peu réchauffé, ressort par l'ouverture 10 par le canal 11 en direction d'un système d'alimentation en fluide de refroidissement notamment en eau de refroidissement, en vue de son recyclage pour revenir par le canal 9 d'amenée d'eau.

Entre l'entonnoir 13 et la cloison 4, en matériau plastique, qui délimite la chambre 5 auxiliaire et qui forme donc la calandre de l'échangeur de chaleur, il est disposé un élément métallique 17 en forme de cloche, qui entoure entièrement l'entonnoir 13. Cette cloche 17 est constituée de deux bagues annulaires 18 et 19 reliées par un échelon 20 annulaire, l'une des bagues 19 annulaire étant de diamètre inférieur à l'autre bague 18 annulaire. Le diamètre de la bague 18 annulaire de la cloche 17 est choisie de manière à correspondre au diamètre de la section transversale circulaire de la chambre 5 auxiliaire, de manière que la liaison entre la paroi 6 de la chambre 5 auxiliaire et la cloche 17, par l'intermédiaire de sa bague annulaire 18 de plus grand diamètre, soit rendue étanche, lors de l'introduction de la partie chaude de l'échangeur de chaleur dans la chambre 5 auxiliaire. En outre, la bague annulaire 19 de la cloche 17 s'applique de manière étanche à l'entonnoir 13 sur le grand diamètre de celui-ci. Sur toute l'étendue axiale (1) de cette bague annulaire 19, il n'y a pas de contact entre la paroi 6 extérieure en plastique et la partie chaude de l'échangeur de chaleur notamment l'entonnoir 13. Au droit de cette bague 19 annulaire, arrive le canal 9 d'amenée de fluide de refroidissement. Il s'ensuit que la bague 19 de la cloche 17 est maintenue à une température froide la plus froide possible et par conduction, la cloche 17 qui est en matériau métallique notamment en inox, est maintenue à une température suffisamment froide pour ne pas faire fondre la cloison 6 en plastique de la chambre 5 auxiliaire, avec laquelle elle est en contact au niveau de la bague 18 annulaire de plus grand diamètre. La cloche 17 est disposée sur l'entonnoir 13 de manière à ne pas permettre la sortie du fluide de refroidissement par l'ouverture 6 de la chambre 5 auxiliaire. La longueur (1) de l'étendue axiale de la bague 19 annulaire de la cloche 17 est à déterminer en fonction des caractéristiques de l'échangeur. Un déflecteur 23 annulaire, constitué d'un anneau en tôle d'inox, force l'eau à circuler sur le diamètre extérieur de la cloche avant de pénétrer dans le milieu de l'échangeur améliorant le refroidissement dans la zone de contact cloche/plastique. Un joint 21 torique d'étanchéité permet de renforcer l'étanchéité de la liaison entre la cloison 6 en plastique et la cloche 17 en matériau métallique. Le même agencement d'une cloche est effectué autour de l'entonnoir 15 du côté de la partie refroidie des gaz d'échappement. Par exemple la température en entrée des gaz est de 480° et en sortie de 400°, tandis que l'eau est à 80° en entrée et 81° en sortie.

On a représenté ici un échangeur de chaleur formé d'une calandre qui est constituée par la cloison 6 de la chambre 5 auxiliaire et par une partie chaude qui est de forme cylindrique. Cependant tout autre forme convient également par exemple une forme carrée, une forme rectangulaire, ou même ovale, comme dans le cas d'échangeur de chaleur à plaque plutôt qu'à faisceau de tube.

Un clip 22 peut être prévu pour venir s'encliqueter sur le raccord de la partie chaude de l'échangeur de chaleur et empêcher ainsi le retrait non intentionnel de la partie chaude de l'échangeur de chaleur.

L'intérêt du dispositif tel que présenté est le fait que l'on peut fabriquer de manière séparée d'une part la partie formant répartiteur d'admission qui forme également la calandre de l'échangeur de chaleur et qui est en plastique et d'autre part la partie métallique ou en acier inox et qui est la partie chaude de l'échangeur de chaleur. Cette partie chaude comporte des pièces cylindriques ou autres simples à assembler par brasure, le nombre de ces brasures étant limité comparé aux échangeurs connus et utilisés aujourd'hui, réduisant par conséquent les risques de fuites et de retouches lors de la fabrication.

L'utilisation de joints toriques permet d'enfiler l'ensemble suivant l'axe dans le plastique et de venir verrouiller à l'aide du clip fil d'acier par exemple très rapidement. Cette opération peut être réalisée chez le plasturgiste. Le non-assemblage rigide des deux parties froide et chaude permet de plus la dilatation des éléments lors de variations de température sans entraîner d'endommagement au système dans son ensemble.

L'utilisation d'un vérin en matière plastique permet de plus d'intégrer la calandre extérieure de la partie froide qui est en plastique dans une autre pièce du moteur réalisée dans la même matière, par exemple dans notre cas ici, le répartiteur d'admission. Cependant, d'autres pièces du moteur également en plastique peuvent être choisies pour servir de calandre en plastique à l'échangeur de chaleur destiné à refroidir les gaz d'échappement avant de les recycler dans la chambre d'admission. De même une pièce plastique indépendante peut être réalisée en vue de sa fixation dans le circuit des gaz d'échappement.

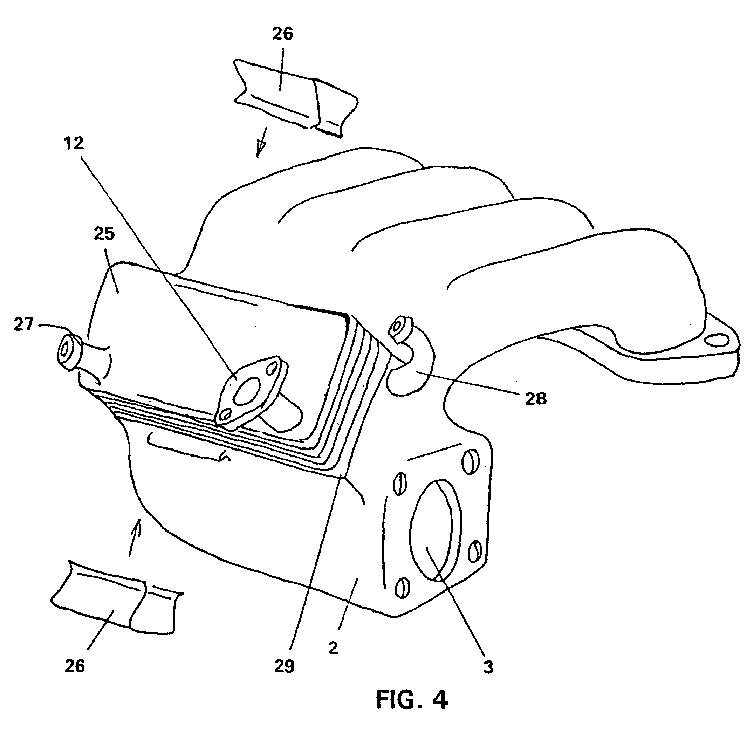

La figure 4 est une vue en perspective d'un autre mode de réalisation d'un répartiteur d'admission suivant l'invention. Les éléments identiques ou de fonctions identiques à ceux du mode de réalisation de la figure 1 sont désignés par les mêmes références numériques.

L'échangeur de chaleur est, dans ce mode de réalisation, un échangeur à plaques.

Les gaz d'échappements pénètrent dans une chambre 25 auxiliaire, éventuellement amovible et maintenue au corps 1 en matériau plastique par des dispositifs 26 à encliquetage.

Du fluide de refroidissement circule dans cette chambre 25 auxiliaire en y entrant, froid, par une entrée 27 de fluide de refroidissement et en sortant quelque peu réchauffé au contact du gaz d'échappement, par une sortie 28.

Les gaz d'échappement pénètrent par le raccord 12 dans la chambre 25, où ils circulent dans un réseau de plaques transversales métalliques, les plaques transversales formant d'une part un circuit fermé de circulation pour les gaz d'échappement et étant d'autre part en communication thermique avec le fluide de refroidissement, pour ainsi refroidir les gaz d'échappement. Les plaques transversales sont disposées les unes au dessus des autres. Les gaz d'échappement pénètrent, après être passés entre les plaques transversales, dans la chambre 2 par une ouverture ménagée dans la dernière plaque de l'échangeur thermique, dernière plaque qui est constituée par une partie 29 en forme de plaque de la paroi extérieure du corps 1 en plastique. Comme les gaz ont été suffisamment refroidis précédemment par le réseau de plaques métalliques, les gaz d'échappement n'endommagent pas cette partie 29 en forme de plaque de la paroi extérieure en plastique du corps 1. Le reste de la cloison, qui constitue la chambre 25, est donc métallique.

La dernière plaque métallique adjacente à la plaque 29 plastique constitue donc, avec les parois métalliques de la chambre 25 les éléments métalliques divisant la chambre 25 auxiliaire en un premier compartiment d'extrémité, un compartiment central et un second compartiment d'extrémité.

Le premier compartiment d'extrémité est constitué par l'espace compris entre la dernière plaque métallique et la partie 29 en forme de plaque en plastique du corps 1 creux.

Le second compartiment d'extrémité est constitué par l'espace formé entre l'entrée 12 et la première plaque métallique de l'échangeur à plaque et le compartiment central est constitué par l'espace entre la première plaque métallique et la dernière, qui jouant également le rôle des éléments métalliques.

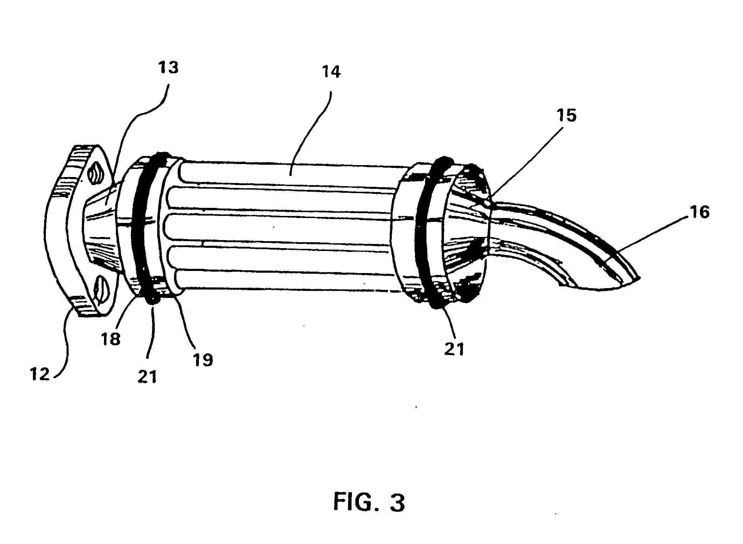

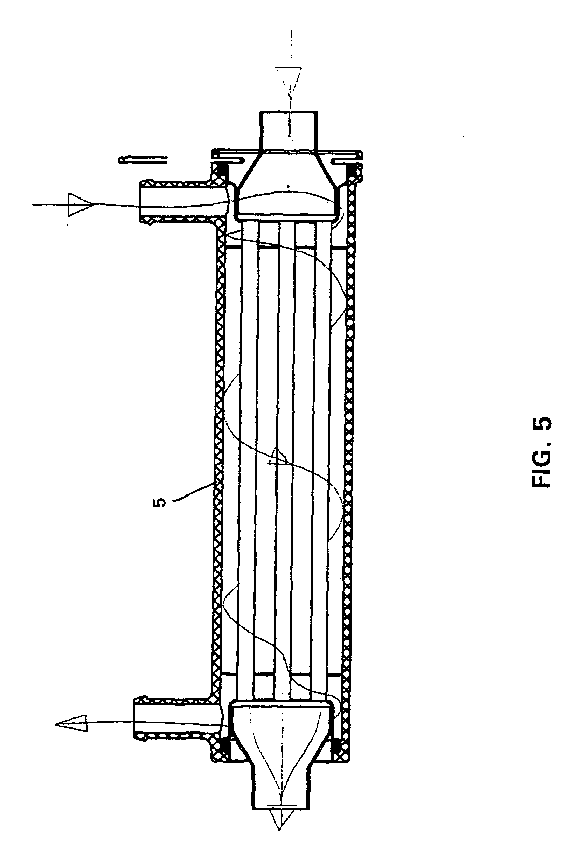

La figure 5 est une vue de côté d'un échangeur de chaleur suivant l'invention. Celui-ci est destiné à être disposé dans le circuit d'admission d'air d'un moteur à combustion interne, notamment en y étant intégré dans un élément du circuit d'admission, par exemple comme décrit pour le répartiteur d'admission des figures 1 à 3 ou 4.

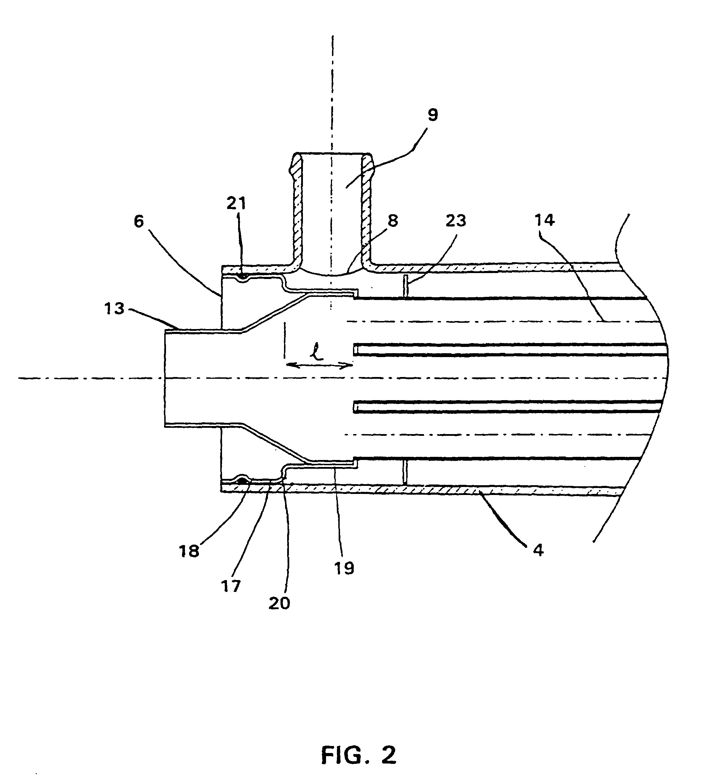

L'échangeur de chaleur est constitué d'une calandre 5 de forme cylindrique. Cette calandre 5 correspond à la chambre 5 auxiliaire du répartiteur d'admission des figures 1 à 3. Le reste des pièces de l'échangeur de chaleur est identique à ce qui est décrit à la figure 2. En outre, les flux de gaz chaud (en ligne droite, en passant par les tubes) et de gaz froid (par les canaux 9 et 11 et en passant autour des tubes) sont représentés par des flèches.

## Revendications

1. Echangeur thermique destiné à être disposé dans le circuit d'admission d'un moteur à combustion interne, notamment dans un répartiteur d'admission comportant un corps (1) creux en matériau plastique définissant une chambre (2) d'admission d'air, une entrée (3) pour l'air et une ou des sortie(s) de communication avec la tête du moteur, **caractérisé en ce qu'**il est constitué
- d'une chambre (5) au moins en partie en matériau plastique ayant une première ouverture (6) vers l'extérieur, une deuxième ouverture (7) communiquant avec la chambre (2) d'admission, une troisième ouverture (8) communiquant avec un canal (9) d'amenée de fluide de refroidissement et une quatrième ouverture (10) communiquant avec un canal (11) de sortie de fluide de refroidissement,
- d'un assemblage métallique formant la partie chaude de l'échangeur de chaleur pour refroidir les gaz d'échappement par le fluide de refroidissement, logé dans la chambre (5), la sortie de l'assemblage communiquant avec la deuxième ouverture de la chambre (5), et la chambre (5) constitue la calandre de l'échangeur de chaleur, et
- d'un premier élément (17) métallique et d'un second élément métallique disposés de manière à diviser la chambre (5) auxiliaire et donc la calandre en un premier compartiment d'extrémité communiquant avec l'extérieur, un compartiment central et un deuxième compartiment d'extrémité, le compartiment central communiquant avec les troisième et quatrième ouvertures de manière à permettre le passage du fluide de refroidissement de l'une à l'autre sans possibilité de passer dans l'un des deux compartiments d'extrémité, le premier élément (17) métallique étant interposé entre la partie de l'assemblage se trouvant dans le premier compartiment d'extrémité et une partie au moins de la cloison (4) de la chambre auxiliaire.

2. Echangeur de chaleur suivant la revendication 1 **caractérisé en ce que** le second élément métallique est également interposé entre l'assemblage formant la partie chaude se trouvant dans le deuxième compartiment d'extrémité et la paroi de la chambre auxiliaire ou calandre.

3. Echangeur de chaleur suivant l'une des revendications 1 ou 2, **caractérisé en ce qu'**on prévoit qu'une partie au moins du premier élément (17) métallique est à l'aplomb de la troisième ouverture de la chambre (5).

4. Echangeur de chaleur suivant l'une des revendications 1 à 3, **caractérisé en ce que** l'on prévoit qu'une partie au moins du second élément métallique est à l'aplomb de la quatrième ouverture, ce qui permet également de refroidir de la même manière que le premier élément métallique par la troisième ouverture, le second élément métallique par conduction dans son ensemble, ce qui permet d'assurer une bonne séparation thermique entre la partie chaude de l'échangeur de chaleur du côté sortie et la chambre (5) formant calandre.

5. Echangeur de chaleur suivant l'une des revendications 1 à 4, **caractérisé en ce que** la chambre (5) est cylindrique, l'échangeur de chaleur est un échangeur de chaleur cylindrique constitué d'un premier entonnoir (13) et d'un deuxième entonnoir (15) entre lesquels s'étend un faisceau de tubes (14), et les deux éléments métalliques sont sous la forme d'une cloche cylindrique sous la forme de deux anneaux (18, 19) disposés côte à côte de rayons différents, et relié l'un à l'autre par un échelon (20) ou rebord, la partie (19) de la cloche ayant le plus petit rayon se trouvant juste en dessous de la troisième ouverture, tandis que la partie (18) de plus grand diamètre vient s'ajuster de manière serrée à la cloison (4) cylindro-circulaire de la chambre (5) auxiliaire.

6. Echangeur de chaleur suivant l'une des revendications 1 à 5, **caractérisé en ce qu'**il est disposé entre le premier élément métallique et la cloison, un joint d'étanchéité (21), notamment un joint annulaire dans le cas d'un échangeur de chaleur cylindrique.

7. Echangeur de chaleur suivant l'une des revendications 1 à 6, **caractérisé en ce qu'**il est prévu également un joint d'étanchéité entre le deuxième élément métallique et la cloison de la chambre (5) formant calandre.

8. Echangeur de chaleur suivant l'une des revendications 1 à 7, **caractérisé en ce que** la sortie de la partie chaude de l'échangeur de chaleur est formée d'un tube (16) coudé dont l'extrémité distale coïncide avec la deuxième ouverture de la chambre (5) formant calandre.

9. Echangeur de chaleur suivant l'une des revendications 5 à 8, **caractérisé en ce que** la distance (1) de la partie (19) de la cloche à l'ouverture (8) est réglée en fonction des caractéristiques de fonctionnement de l'échangeur de chaleur.

10. Elément du circuit d'admission d'un moteur à combustion interne, notamment répartiteur d'admission comportant un corps (1) creux au moins en partie en matériau plastique définissant une chambre (2) d'admission ayant une entrée (3) pour l'air et une ou des sorties de communication avec la tête du moteur, le corps (1) creux comportant une cloisoin (4) au moins en partie en matériau plastique qui définit la chambre (5) formant calandre d'un échangeur thermique suivant l'une des revendications précédentes.

11. Elément du circuit d'admission suivant la revendication 10, **caractérisé en ce que** la cloison (4) est en partie en matériau plastique et le reste de la cloison (4) est métallique.

12. Elément du circuit d'admission suivant la revendication 10 ou 11, **caractérisé en ce qu'**il est prévu un dispositif (22) de verrouillage, notamment par encliquetage, pour fixer l'assemblage au circuit d'admission, notamment au répartiteur d'admission, dans sa position de fonctionnement dans la chambre auxiliaire.

## Claims

1. A heat exchanger for an air intake circuit of an internal combustion engine, in particular in a intake splitter, including a hollow body (1) in a plastic material which defines an air intake chamber (2), an entry (3) for air and one or a plurality of exits communicating with the head of the engine, **characterized in that** it comprises
an auxiliary chamber (5), at least part of which is in a plastic material, having a first opening (6) towards the outside, a second opening (7) that communicates with the chamber (2), a third opening (8) that communicates with a canal (9) that brings in coolant fluid and a fourth opening (10) that communicates with a canal (11) which takes coolant fluid out ; a metallic assembly, which forms the hot part of a heat exchanger to cool exhaust gases which come through the assembly by way of the coolant fluid, located in the chamber, in which the exit of the assembly communicates with the second opening of the chamber (5) and the chamber (5) constitutes the frame of the heat exchanger; and
a first metallic assembly (17) and a second metallic assembly implemented so as to divide the auxiliary chamber (5), and divide the frame, into a first extremity compartment that communicates with the outside, a central compartment and a second extremity compartment, in which the central compartment communicates with the third and fourth openings so that the coolant fluid may flow from one to the other without coming into one of the extremity compartments and in which the first metallic element is implemented between the part of the assembly (17) located in the first extremity compartment and at least part of the wall (4) of the auxiliary chamber.

2. A heat exchanger according to claim 1, **characterized in that** the second metallic element is also implemented between the hot part of the assembly (17) located in the second extremity compartment and the wall of the auxiliary chamber (5) or frame.

3. A heat exchanger according to claim 1 or 2, **characterized in that** at least part of the first metallic element is located above the third opening of the chamber.

4. A heat exchanger according to one of claims 1 to 3, **characterized in that** at least part of the second metallic element is located above the fourth opening of the auxiliary chamber, such that the second metallic element is entirely kept cold by conduction in the same manner as the first metallic element by the third opening so as to enable a good thermal separation between the hot part of the heat exchanger on the exit side and the chamber (5) which forms the frame.

5. A heat exchanger according to one of claims 1 to 4, **characterized in that** the chamber (5) has a cylindrical shape, the heat exchanger is cylindrical and constitutes a first funnel (13) and second funnel (15) between which an array (14) of pipes extends, the two metallic elements take the form of a cylindrical bell constituting of two rings 18, 19) implemented side by side, having a different radius from one another and linked to one another by a rim or lip (20) and the part (19) of the bell with the smallest radius is located underneath the third opening whereas the ring (18) with the largest radius adjusts tightly to the cylindrically-circular wall (4) of the auxiliary chamber (15).

6. A heat exchanger according to one of claims 1 to 5, **characterized in that** a waterproof seal, notably a circular seal (21) in the case of a cylindrical heat exchanger, is implemented between the first metallic element and the wall.

7. A heat exchanger according to one of claims 1 to 6, **characterized in that** a waterproof seal is also implemented between the second metallic element and the wall of the chamber (15) which forms the frame.

8. A heat exchanger according to one of claims 1 to 7, **characterized in that** the exit of the hot part of the heat exchanger constitutes of a bent pipe (16), the distal extremity of which coincides with the second opening of the chamber (15) which forms the frame.

9. A heat exchanger according to one of claims 5 to 8, **characterized in that** the distance (1) between the part (19) of the bell to the opening (18) is adjusted according the working characteristics of the heat exchanger.

10. An element of the air intake circuit of an internal combustion engine, in the form of an intake splitter, including a hollow body (1), at least part of said body is in a plastics material and which defines an intake chamber (2) with an entry (3) for air and one, or more exists which communicate with the head of the engine, wherein the hollow body (1) includes a wall (4), at least part of which is in a plastics material, and said wall defines the chamber (5) that forms the frame of a heat exchanger according to one of the previous claims.

11. An element of the air intake circuit according to claim 10, **characterized in that** at least part of the wall (4) is in a plastics material and the remaining part of the wall (4) is metallic.

12. An element of the air intake circuit according to claim 10, **characterized in that** a locking mechanism (22) is implemented, notably by latching, to fixate the assembly to the air intake circuit, notably to the intake splitter, in its working position within the auxiliary chamber.

## Patentansprüche

1. Wärmetauscher, der dazu bestimmt ist, im Einlasskreis eines Verbrennungsmotors, insbesondere in einem Einlassverteiler, angeordnet zu werden, der einen Hohlkörper (1) aus Kunststoffmaterial aufweist, welcher eine Lufteinlasskammer (2), einen Eingang (3) für die Luft und einen oder mehrere Ausgänge zur Verbindung mit dem Kopf des Motors definiert, **dadurch gekennzeichnet, dass** er
- aus einer zumindest teilweise aus Kunststoffmaterial bestehenden Kammer (5), die eine erste Öffnung (6) nach außen, eine zweite, mit der Einlasskammer (2) in Verbindung stehende Öffnung (7), eine dritte Öffnung (8), die mit einem Kühlfluid-Zufuhrkanal (9) in Verbindung steht, und eine vierte Öffnung (10) aufweist, die mit einem Kühlfluid-Ausgangskanal (11) in Verbindung steht,
- aus einem metallischen Aufbau, der den warmen Bereich des Wärmetauschers zum Kühlen der Auspuffgase durch das Kühlfluid bildet und sich in der Kammer (5) befindet, wobei der Ausgang des Aufbaus mit der zweiten Öffnung der Kammer (5) in Verbindung steht und die Kammer (5) die Verkleidung des Wärmetauschers bildet, und
- aus einem ersten metallischen Element (17) und einem zweiten metallischen Element besteht, die so angeordnet sind, dass sie die Hilfskammer (5) und somit die Verkleidung in ein erstes Endabteil, das mit der Außenumgebung in Verbindung steht, ein zentrales Abteil und ein zweites Endabteil aufteilen, wobei das zentrale Abteil mit der dritten und der vierten Öffnung in Verbindung steht, um den Durchgang des Kühlfluids von einer zur anderen zu erlauben, ohne die Möglichkeit, in eines der beiden Endabteile überzugehen, wobei das erste metallische Element (17) zwischen dem Bereich des Aufbaus, der sich im ersten Endabteil befindet, und zumindest einem Teil der Trennwand (4) der Hilfskammer eingefügt ist.

2. Wärmetauscher nach Anspruch 1, **dadurch gekennzeichnet, dass** das zweite metallische Element auch zwischen den den warmen Bereich bildenden Aufbau, der sich im zweiten Endabteil befindet, und die Wand der Hilfskammer oder Verkleidung eingefügt ist.

3. Wärmetauscher nach einem der Ansprüche 1 oder 2, **dadurch gekennzeichnet, dass** vorgesehen wird, dass zumindest ein Teil des ersten metallischen Elements (17) sich vor der dritten Öffnung der Kammer (5) befindet.

4. Wärmetauscher nach einem der Ansprüche 1 bis 3, **dadurch gekennzeichnet, dass** vorgesehen wird, dass zumindest ein Teil des zweiten metallischen Elements sich vor der vierten Öffnung befindet, was es außerdem ermöglicht, auf die gleiche Weise wie das erste metallische Element durch die dritte Öffnung, das zweite metallische Element durch Leitung in seiner Gesamtheit zu kühlen, wodurch eine gute thermische Trennung zwischen dem warmen Bereich des Wärmetauschers auf der Ausgangsseite und der die Verkleidung bildenden Kammer (5) gewährleistet werden kann.

5. Wärmetauscher nach einem der Ansprüche 1 bis 4, **dadurch gekennzeichnet, dass** die Kammer (5) zylindrisch ist, der Wärmetauscher ein zylindrischer Wärmetauscher ist, der aus einem ersten Trichter (13) und einem zweiten Trichter (15) besteht, zwischen denen ein Rohrbündel (14) verläuft, und die beiden metallischen Elemente in Form einer zylindrischen Glocke in Form von zwei Ringen (18, 19) vorliegen, die nebeneinander mit verschiedenen Radien angeordnet und miteinander über eine Stufe (20) oder Randleiste verbunden sind, wobei der Teil (19) der Glocke mit dem kleineren Radius sich genau unter der dritten Öffnung befindet, während der Teil (18) mit größerem Durchmesser sich eng an die zylindrischkreisförmige Trennwand (4) der Hilfskammer (5) anpasst.

6. Wärmetauscher nach einem der Ansprüche 1 bis 5, **dadurch gekennzeichnet, dass** zwischen dem ersten metallischen Element und der Trennwand eine Dichtung (21) angeordnet ist, insbesondere eine Ringdichtung im Fall eines zylindrischen Wärmetauschers.

7. Wärmetauscher nach einem der Ansprüche 1 bis 6, **dadurch gekennzeichnet, dass** ebenfalls eine Dichtung zwischen dem zweiten metallischen Element und der Trennwand der eine Verkleidung bildenden Kammer (5) vorgesehen ist.

8. Wärmetauscher nach einem der Ansprüche 1 bis 7, **dadurch gekennzeichnet, dass** der Ausgang des warmen Bereichs des Wärmetauschers von einem gekrümmten Rohr (16) gebildet wird, dessen distales Ende mit der zweiten Öffnung der eine Verkleidung bildenden Kammer (5) zusammenfällt.

9. Wärmetauscher nach einem der Ansprüche 5 bis 8, **dadurch gekennzeichnet, dass** der Abstand (I) des Bereichs (19) der Glocke zur Öffnung (8) in Abhängigkeit von den Betriebseigenschaften des Wärmetauschers eingestellt wird.

10. Element des Einlasskreises eines Verbrennungsmotors, insbesondere Einlassverteiler, der einen zumindest teilweise aus Kunststoffmaterial bestehenden Hohlkörper (1) aufweist, welcher eine Einlasskammer (2) mit einem Eingang (3) für die Luft und einen oder mehrere Ausgänge zur Verbindung mit dem Kopf des Motors definiert, wobei der Hohlkörper (1) eine zumindest teilweise aus Kunststoffmaterial bestehende Trennwand (4) aufweist, die die Kammer (5) bildet, welche die Verkleidung eines Wärmetauschers nach einem der vorhergehenden Ansprüche bildet.

11. Element des Einlasskreises nach Anspruch 10, **dadurch gekennzeichnet, dass** die Trennwand (4) zum Teil aus Kunststoffmaterial und der Rest der Trennwand (4) aus Metall ist.

12. Element des Einlasskreises nach Anspruch 10 oder 11, **dadurch gekennzeichnet, dass** eine Vorrichtung (22) zur Verriegelung, insbesondere durch Einschnappen, vorgesehen ist, um den Aufbau am Einlasskreis zu befestigen, insbesondere am Einlassverteiler, in seiner Betriebsstellung in der Hilfskammer.
